(19) Europäisches Patentamt / European Patent Office / Office européen des brevets

(11) **EP 2 261 089 B1**

(12) **EUROPEAN PATENT SPECIFICATION**

(45) Date of publication and mention
of the grant of the patent:
**13.03.2013 Bulletin 2013/11**

(51) Int Cl.:
***B60R 21/0132*** *(2006.01)*

(21) Application number: **09100329.3**

(22) Date of filing: **10.06.2009**

(54) **Method for crash recognition in a vehicle**

Verfahren zur Aufprallerkennung in einem Fahrzeug

Procédé de contrôle pour la reconnaissance de collision d'un véhicule

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**15.12.2010 Bulletin 2010/50**

(73) Proprietors:
• **ROBERT BOSCH GMBH**
  **70442 Stuttgart (DE)**
• **Volvo Car Corporation**
  **405 31 Göteborg (SE)**

(72) Inventors:
• **Rauh, Christian**
  **81377, Muenchen (DE)**
• **Becker, Jens**
  **70597, Stuttgart (DE)**
• **Nilsson, Paer**
  **41671, Goeteborg (SE)**
• **Lich, Thomas**
  **71409, Schwaikheim (DE)**
• **Moldenhauer, Maike**
  **71111, Waldenbuch (DE)**
• **Wogel, Anders**
  **42470, Olofstorp (SE)**
• **Doerr, Alfons**
  **70597, Stuttgart (DE)**
• **Harda°, Peter**
  **41324, Goeteborg (SE)**
• **Axelsson, Anders**
  **42341, Torslanda (SE)**
• **Rittler, Stephan**
  **73660, Urbach (DE)**
• **Hiemer, Marcus**
  **88074, Kehlen (DE)**

(56) References cited:
EP-A- 1 486 382          WO-A-03/024750
WO-A-2008/048159      US-A1- 2004 176 893
US-A1- 2004 176 897      US-A1- 2005 159 864

**Description**

Prior art

The present invention relates to a method of claim 1.

In general, a vehicle's movement in a crash is mainly considered a linear movement. It is assumed here that it is exclusively a linear impulse transfer, described by the definable quantity of the deceleration (dv), and a linear force transfer, described by the measurable quantity of the acceleration (a), that take place. In reality, however, combinations of rotational and linear movements occur in a crash.

WO 2008/048159 addresses a vehicle safety system, in which a trigger signal is provided when a lateral acceleration or a rotational acceleration exceed a predefined threshold value.

Disclosure of the invention

On this background, the present invention serves to present a method of crash recognition in a vehicle, product according to the independent claim. Advantageous embodiments result from the respective dependent claims and the following description.

The invention is based on the finding that the location of the application of force in a vehicle crash may be approximated from the ratios of the linear power and the rotational power. This serves to facilitate improved recognition of side crashes by a combination of rotational and linear movements.

The central idea of the invention is, on the one hand, the consideration of rotational signal energy both in a crash performed in the crash a hall and in the case of actual accidents. On the other hand, enabling of vehicle occupant protection means is made possible, either when an enduring rotational power or an enduring linear power take place. Same may be effected by forming the ratio of the linear crash power and the rotational crash power. Differentiating between an "out of zone" crash and an "in zone" crash is also possible. An "out of zone" crash is a crash in front of the A pillar or behind the C pillar, and an "in zone" crash is a crash between the A and C pillars.

With the help of the inventive approach, functionalities to be performed in a side crash, in particular, may be improved. Specifically, various side crash scenarios and the corresponding crash severities may be determined and, depending thereon, restraint means may be controlled.

The present invention serves to facilitate improved controlling of the thorax airbag. The thorax airbag is fired in intrusions only. If it is recognised that no intrusion has been effected, that is, that the crash happened "out of zone", the thorax airbag is to be inhibited and saved for a potential future event, in which the protective effect of this restraint means may be better taken advantage of.

Improved controlling of the window bag is also possible. The window bag may be of advantage in an "out of zone" crash, where the occupant's head is prone to incur injuries for example from the B pillar or the side window. By implementing the inventive approach, such trigger scenarios may be taken into account in the trigger algorithms of the restraint devices.

Furthermore, recognizing crash scenarios difficult to trigger, such as a truck underride or a collision with large animals (elks, horses,...), may be supported. As a whole, it is possible to take the entire mechanical power into account that is transferred during an early crash phase. It is also possible to save on the sensor system, especially in ESP, which at the same time leads to a new airbag functionality.

The present invention provides a method of crash recognition in a vehicle, with the following steps: receiving a linear signal via an interface, the linear signal comprising information on a linear movement of the vehicle; defining a linear power value, based on the linear signal; receiving a rotation signal via an interface, the rotation signal comprising information on a rotational movement of the vehicle; defining a rotational power value, based on the rotation signal; and ascertaining a ratio value, based on a ratio of the linear power value and the rotational power value, the ratio value being suitable for defining information on a crash type and/or a crash location.

A crash may be understood as a collision of the vehicle with an object, a body or another vehicle. The crash location may identify the location on the vehicle, where the crash takes place. The crash type may include a classification of the crash. The information on the crash type or its crash location, respectively, may be used for triggering suitable vehicle occupant protection means of the vehicle. The linear signal may represent a sensor signal or be ascertained from a sensor signal and may comprise speed information or acceleration information of the vehicle or a vehicle component in a longitudinal direction. Correspondingly, the rotation signal may represent a sensor signal or be ascertained from a sensor signal and comprise speed information or acceleration information of the vehicle or a vehicle component in a non-linear or rotational direction. The linear signal and the rotation signal may be based on current data as well as on data detected within a time interval, for example since the start of the crash. The power values may be a measure of a mechanical power converted within a period of time, e. g. since the start of the crash.

For example, the rotation signal may comprise information on a rotation rate, a pitch rate and/or a roll rate of the vehicle. In this manner, rotational movements of the vehicle occurring in the crash may be accounted for.

The linear signal may comprise information on a linear acceleration and/or a linear speed, and the rotation signal may comprise information on a rotational speed and/or a rotational acceleration of the vehicle. These values may be collected and provided by sensors already employed in the automotive industry. Thus, the linear power value may comprise a product of the linear acceleration and the linear speed, and the rotational power value may comprise a product of the rotational speed and the rotational acceleration. Therefore, the power values may correspond to the respective kinetic power of the vehicle, or else there may be a direct or indirect correlation between the power values and the respective powers.

In general, the linear power value may be proportional to the linear signal, and the rotational power value may be proportional to the rotation signal. Therefore, the inventive approach may also be implemented when parameters required for determining the power actually converted, such as the vehicle's mass, are not known.

According to an embodiment, the step of ascertaining the ratio value may comprise performing a division of the linear power value and the rotational power value. In this manner, the ratio of the power values may be ascertained very accurately.

The step of ascertaining the ratio value may also comprise effecting a comparison between the linear power value and their rotational power value. Such a comparison may be easier to implement than a division.

The step of ascertaining the ratio value here may be performed in dependence on a comparison of the linear power value and a predefined first minimum quantity and/or a comparison of the rotational power value and a predefined second minimum quantity. If the ratio value is determined by means of a division, a numerically critical division with a small number may be avoided by means of the minimum quantities.

The inventive method may comprise a step of evaluating a quantity of the ratio value in order to determine the crash type and/or location. This information may be used for especially adjusting the triggering of vehicle occupant protection means to the current crash.

In addition, the inventive method may comprise a step of evaluating a magnitude of the linear power value and/or the rotational power value in order to determine information on a crash severity. The crash severity may also be accounted for in a decision on the triggering of occupant protection means. For this purpose, a combination of the linear and the rotational signal paths is not necessary.

For example, the linear signal may represent a signal provided by at least one linear acceleration sensor arranged in the vehicle, and the rotation signal may represent a signal provided by at least one linear acceleration sensor and/or rotation rate sensor arranged in the vehicle. By means of such sensors, cost-effective and reliable detection of the input data used for the inventive method is possible.

The inventive method further provides a control device configured to perform or implement the steps of the inventive method. This embodiment of the invention in the form of a control device also serves to achieve the object underlying the invention in a fast and efficient manner.

At hand, a control device may be an electric device, which processes sensor signals and, in dependence thereon, outputs control signals. The control device may comprise an interface, which may be configured in hardware and/or in software. In the case of a configuration in hardware, these interfaces may be part of a socalled system ASIC, which comprises diverse functions of the control device, for example. However, it is also possible that the interfaces be individual, integrated circuits or at least partially consist of discrete components. In the case of a configuration in software, the interfaces may be software modules, which may be provided on a microcontroller next to other software modules, for example.

What is also advantageous is a computer program product with program code stored on a machine-readable carrier such as a semiconductor memory, a hard disk or an optical memory and utilized for performing the method of any one of the aforementioned embodiments, when the program for is executed on a control device.

In the following, the invention is exemplarily explained in detail by means of the accompanying drawings.

Fig. 1    shows a block diagram of a sensor configuration in a vehicle; and
Fig. 2    shows a flow chart of the inventive method according to an embodiment of the present invention.

In the figures below, like or similar elements may be provided with like or similar reference numbers, with a repeated description being dispensed with. In addition, the figures of the drawings, the description thereof as well as the claims include numerous features in combination. A person skilled in the art clearly understands that these features may also be regarded individually or that they may be combined to form further combinations that are not explicitly described herein. Furthermore, the invention may in the following description be discussed using different measures and dimensions, whereby stating these measures and dimensions is not to be understood such that the invention is to be understood as limited to these measures and dimensions.

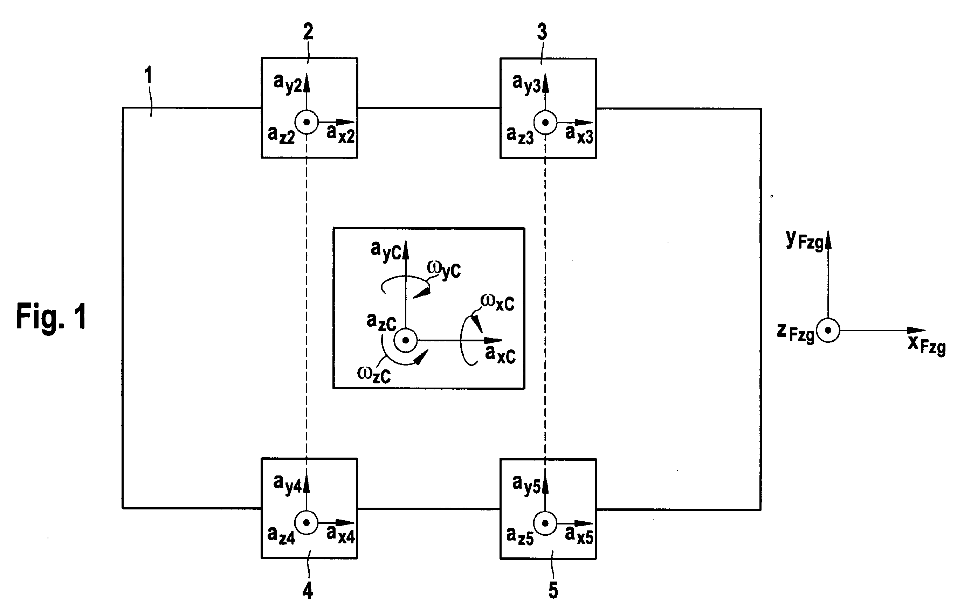

Figure 1 shows a block diagram of a sensor configuration, which, according to an embodiment of the invention, is suitable for a system for determining the crash severity and crash type on the basis of a distributed crash sensor system.

What is shown is a schematic representation of a vehicle 1 in bird's eye view. Vehicle 1 comprises four distributed sensors 2, 3, 4, 5. There may, however, more or less distributed sensors 2, 3, 4, 5 be present. The sensors 2, 3, 4, 5 may be arranged in a plane in parallel to the x-y plane but may also be mounted at different heights relative to the road surface.

Each of the distributed sensors 2, 3, 4, 5 may comprise three measuring channels for e.g. acceleration signals $a_{ij}$ with e.g. i={x, y, z} and e.g. j={2, 3, 4, 5}. Here, x may correspond to the x direction along the vehicle's longitudinal axis, y may correspond to the y direction along the vehicle's cross axis and z may correspond to the z direction along the vehicle's vertical axis. What is also possible is that only one channel is comprised in the distributed sensors 2, 3, 4, 5, such as in the x direction only, in the y direction only or in the z direction only. Furthermore, arbitrary combinations of sensor channels across the distributed sensors 2, 3, 4, 5, are conceivable, for example sensor element 2 in the x direction only, sensor element 3 in the y direction only, sensor element 4 with only two channels, e.g. in the y and z directions, and sensor element 5 with three channels, e.g. in the x, y and z directions.

Apart from the distributed sensors 2, 3, 4, 5, vehicle 1 may comprise a central control unit 6, which is advantageously arranged near the vehicle's center of gravity. The central control unit 6 may comprise, among other things, linear acceleration sensors in the x direction so as to provide a measuring signal $a_{xC}$, in the y direction so as to provide a measuring signal $a_{yC}$ and in the z direction so as to provide a measuring signal $a_{zC}$. In addition, the central control unit 6 may comprise rotation rate sensors for measuring the rotation rate on the z axis, so as to provide a measuring signal "yaw rate $\omega_{zC}$", for measuring the rotation rate on the y axis, so as to provide a measuring signal "pitch rate $\omega_{yC}$", and for measuring the rotation rate on the x axis, so as to provide a measuring signal "roll rate $\omega_{xC}$". It is, however, also possible that the control device 6 comprise, instead of three linear acceleration sensors, only two linear acceleration sensors or only one linear acceleration sensor. Any combinations of linear acceleration sensors and rotation rate sensors, that is e.g. two linear acceleration sensors in the x and y directions as well as two rotation rate sensors on the z axis and on the x axis, are of course also possible.

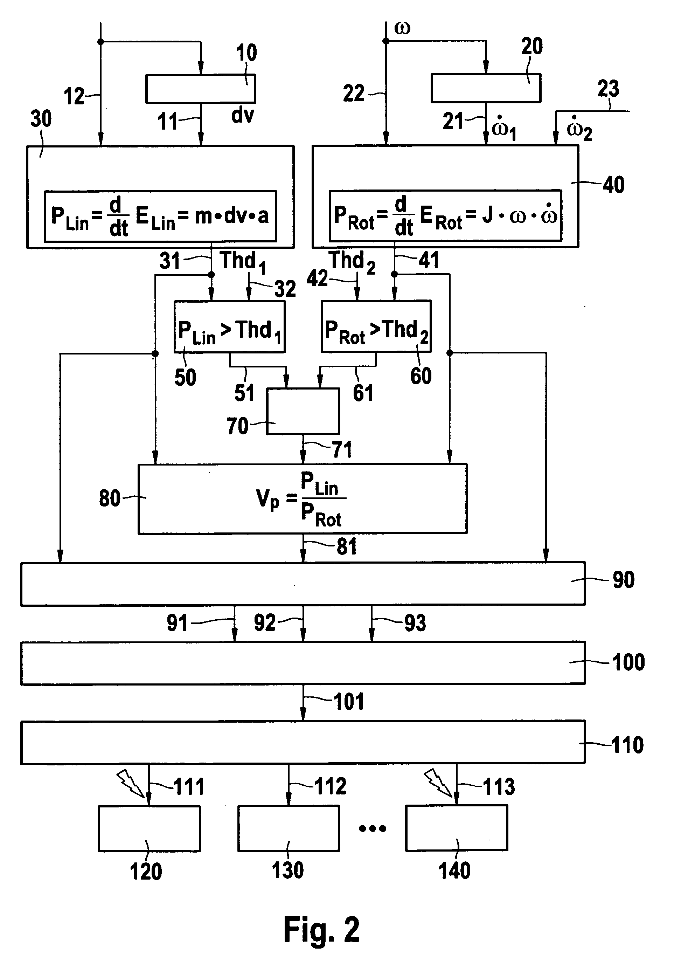

By means of the sensors 2, 3, 4, 5, 6 described in Figure 1, both rotational and linear movements as well as combinations thereof, which occur in a crash, may be detected. According to the invention, specifically the rotational impulse transfer, represented by the rotation rate $\omega$, and the torque, described by the definable quantity $\dot{\omega}$, may be accounted for. For this purpose, a linear function $F_1(a, dv)$ and a rotational function $F_2(\omega, \dot{\omega})$ may be determined. In the simplest case, this observation results in an analysis of the linear or rotational performances, respectively. The embodiment of a combination of rotational and linear movements described by means of Figure 2 therefore also observes the rotational kinetic performance next to the linear kinetic performance. By the use of divisions with respect to the "rotation rate $\omega$ in dependence on the rotational acceleration $\dot{\omega}$", that is $\omega(\omega')$ , and with respect to the "linear deceleration dv in dependence on the acceleration a", that is dv(a), there is a chance to on the one hand improve the misuse robustness and on the other hand improve assessing the endurance of rotational and linear powers occurring in a crash.

In the linear case, a misuse scenario such as a hammer blow in most cases results in a large force and proportionally a fast acceleration along with a very slight impulse transfer dv. On the other hand, a braking action, such as slowing down from 50 km/h to 0 km/h at a set of traffic lights, effects a high impulse transfer at little acceleration (normally less than 1 g). In the "rotary case", turning into a fast cornering stands for a high impulse transfer at low torque, whereas a football laterally the striking the fender causes high torque at a low impulse transfer. Only when rotational impulse transfer and torque or impulse transfer and force, respectively, are present to a sufficient and enduring degree, the occupant's risk of injury will be high enough for a triggering of occupant protection means to be justified. From the ratios of linear power and rotational power, the location of the application or force may be approximated.

According to the invention, the respective restraint means may be controlled via the rotation path or via the linear path or via both paths.

Figure 2 shows a block diagram of a configuration and function of a system according to an embodiment of the present invention. What is specifically shown is individual steps of a possible embodiment of a method of crash detection in a vehicle.

In a linear signal path, a linear signal 12, for example a linear acceleration a, may be received. The linear signal 12 may be supplied to an integrator 10 and means 30 for defining a linear power value 31. The means 30 may be configured to define a linear kinetic power as the linear power value 31.

In a rotational signal path, a rotation signal 22, e.g. an angular speed $\omega$, may be received. The rotation signal 22 may be supplied to a differentiator 20 and means 40 for determining a rotational power value 41. The means 40 may be formed to define a rotational kinetic power as a rotational power value 41.

From the linear power value 31 and the rotational power value 41, in combination or separately, information on the crash severity and the crash type and/or crash location may be determined in means 90 for the determination of the crash severity, the crash type and/or the crash impact location.

Furthermore, the linear signal path and a rotational signal path may be merged by forming a ratio of the linear power value 31 and their rotational power value 41 in means 80. A ratio value 81 determined in the means 80 may be provided to the means 90 for determining the information on the crash severity and the crash type and/or crash location and may be analyzed separately or in combination with at least one power value 31, 41.

Information on the crash severity 91, the crash type 92 and the crash location 93 may be supplied to means 100 for plausibilization. The means 100 for plausibilization may be formed for providing, based on the crash severity 91, the crash type 92 and the crash location 93, a signal 101 to means 110 for controlling occupant protection means or restraint means. The means 110 may be formed to control, in response to the signal 101, first restraint means 120, second restraint means 130 and N-th restraint means 140.

In the following, the block diagram shown in figure 2 is explained in detail by means of a further embodiment.

In the linear signal path, data of a linear acceleration sensor 12, e.g. the y acceleration, may be time-integrated in the integrator 10 and may supply a signal 11, e.g. the deceleration dv. In block 10, a window integrator or a filter approximating the integrator or the window integrator may be implemented instead of the integrator. The two quantities 11, 12 are processed in block 30, in which the linear kinetic power is evaluated. The linear kinetic $E_{Lin}$ is defined as

$$E_{Lin} = \frac{1}{2} \, m \cdot dv^2 \overset{\square}{\Rightarrow} P_{Lin} = \frac{d}{dt} E_{Lin} = m \cdot dv \cdot a$$

$$\overset{\square}{\Rightarrow} a = \frac{P_{Lin}}{m} \cdot \frac{1}{dv}$$

As the equation shows, there is a physical connection between the signal 12 (a in the example) and the signal 11 (dv in the example). Block 30 supplies a linear power signal 31, which includes the linear power of the vehicle movement.

In the rotational signal path, the rotation rate 22 may be supplied to a power evaluation block 40. The rotation rate 22 may origin from a rotation rate sensor in block 6 shown in Figure 1, or it may be calculated from the distributed acceleration sensors 2, 3, 4, 5 shown in figure 1.

The differentiator 20 may be implemented via a difference operation between two filtered or unfiltered, subsequent or temporally offset signal values of the signal 22. A further advantageous implementation of the differentiator 20 may be a recursive least squares estimator. The signal 21 coming from block 20 may represent the rotational acceleration $\dot{\omega}_1$.

Besides the derivation of the rotation rate signal 22 in the differentiator 20, the rotational acceleration 21 may also be directly calculated from the distributed acceleration sensors 2, 3, 4, 5 shown in figure 1. Here, the position, such as the distance of the acceleration sensors from the vehicle's point of gravity, may be taken into account. For the embodiment shown in figure 2, this evaluation of the distributed acceleration sensors supplies the rotational acceleration signal $\dot{\omega}_2$. The signals 21, 22 are processed in block 40, in which the rotational kinetic energy or power is evaluated. The rotational kinetic energy $E_{Rot}$ is defined as

$$E_{Rot} = \frac{1}{2} J \cdot \omega^2 \overset{\square}{\Rightarrow} P_{Rot} = \frac{d}{dt} E_{Rot} = J \cdot \omega \cdot \dot{\omega}$$

$$\overset{\square}{\Rightarrow} \dot{\omega} = \frac{P_{Rot}}{J} \cdot \frac{1}{\omega}$$

As the equation shows, there is a direct physical connection between the signals 22 and 21 or 23 respectively. The output of block 40 is a quantity that includes the rotational power of the vehicle's movement.

Signal 31, which represents the linear force, may be compared to an adjustable threshold Thd1 32 in a comparison block 50 and may supply an excess flag 51. The excess flag 51 may be "0", if the signal 31 is smaller than the threshold 32. The excess flag 51 may be "1" if the signal 31 is larger than the threshold 32.

The signal 41, which represents the rotational force, made be compared to an adjustable threshold Thd2 42 in a second comparison block 60 and may supply a second excess flag 61. The excess flag 61 may be "0" if the signal 41 is smaller than the threshold of 42. The excess flag 61 may be "1", if the signal 41 is larger than the threshold 42.

The two excess flags 51, 61 may be combined in the logic AND element 70. As an output of the AND element 70, a signal 71 includes the information that both signals 31, 41 have exceeded their respective thresholds 32, 42.

In block 80, a ratio Vp of the linear and rotational powers 31, 41 may be formed. In order to avoid numerically critical divisions of a small number ($P_{Lin}$, signal 31) by another small number ($P_{rot}$, signal 41), the ratio formation 80 may, for example, be executed only when the signal 71 contains a logic "1".

The ratio Vp 81 may be used in block 90 for the crash severity, the crash type and the determination of the crash impact location. The crash severity is output via the signal output 91, the crash type is output via the output 92 and the crash impact location is output as signal 93.

The signal 31 includes the information on the crash severity 91 (deceleration dv). The signal 41 also includes information on the crash severity ($\omega$). In the case of large $\omega$ values, there is a high risk for the driver's head to collide with the B pillar or the window. The crash type 92 and the crash impact location 93 may be calculated from the signal 81.

If, in a side crash, the vehicle is hit e.g. "off zone", that is in front of the A pillar or behind the C pillar, then the rotational power on the z axis 41 will be significantly larger than the linear power 31. The ratio Vp in signal 81 will then be small.

If, in a side crash, the vehicle is e.g. hit "in zone", that is between the A pillar and the C pillar, then the rotational power on the z axis 41 will be significantly smaller than the linear force 31. The ratio Vp in signal 81 will then be large.

If the acceleration sensors 2, 3, 4, 5 shown in figure 1 are skillfully arranged, even crash types that are difficult to detect, such as a truck underride or a collision with large objects (e.g. horses, elks, ...), which hit the vehicle directly on the windshield or in the upper area of the A pillars, may be recognized via the z channels, for example.

The crash severity 91, the crash type 92 and the information on the crash impact location 93 may enter the plausibilization unit 100. In the plausibilization unit 100, a check may be made, whether the respective signal is a misuse signal or a trigger signal. If block 100 plausibilizes the crash event and issues enabling via the signal 101, the restraint means will be controlled in block 110. At the signals 111, 112, 113, logic "0" or "1" levels are present, in correspondence with the existing information on the crash severity 91, the crash type 92 and the crash impact location 93. If a logic "1" is present, the respective restraint means 120, 130, 140 shown in figure 2 will be fired. In the embodiment shown in figure 2, the first restraint means 120 and the N-th restraint means 140 are fired.

According to an embodiment of the ratio forming in block 80, the actual ratio forming in the form of a division may be avoided. Instead, the respective sensor values may be compared to one another.

Here, an "in zone flag" indicating an "in zone" crash may be set, if:

$$m \cdot dv \cdot a > k_1 \cdot J \cdot \omega \cdot \dot{\omega} \text{ or } dv \cdot a > k_2 \cdot \omega \cdot \dot{\omega}.$$

Accordingly, an "off zone flag" indicating an "off zone" crash may be set, if:

$$m \cdot dv \cdot a < k_3 \cdot J \cdot \omega \cdot \dot{\omega} \text{ or } dv \cdot a < k_4 \cdot \omega \cdot \dot{\omega}.$$

In all other cases, both the "off zone flag" and the "in zone flag" may be set.

Here, m may be a relevant vehicle mass, J may be a relevant vehicle torque and $k_1$, $k_2$, $k_3$, $k_4$ may be suitable parameters.

The inventive approach may for example be employed in an airbag project, which obtains its data from a control device providing the rotation signals at a sampling rate that is sufficiently high.

The embodiments described are only exemplarily and may be combined with one another. In addition, the method steps shown may be executed repeatedly and in an order other than described.

**Claims**

1. Method of crash recognition in a vehicle, comprising:

   Receiving a linear signal (12) via an interface, the linear signal comprising information on a linear movement of the vehicle;
   Determining (30) a linear power value (31), based on the linear signal;
   Receiving a rotation signal (22, 23) via an interface, the rotation signal comprising information on a rotational movement of the vehicle;
   Determining (40) a rotational power value (41), based on the rotation signal; and
   Ascertaining (80) a ratio value (81), based on a ratio of the linear power value and the rotational power value, the ratio value being suitable for determining information on a crash type (92) and/or a crash location (93).

2. Method of claim 1, in which the rotation signal (22, 23) comprises information on a rotation rate, a pitch rate and/or a roll rate of the vehicle.

3. Method of any one of the preceding claims, in which the linear signal (12) comprises information on a linear accel-

**EP 2 261 089 B1**

eration and/or a linear speed and the rotation signal (22, 23) comprises information on a rotational speed and/or a rotational acceleration of the vehicle.

4. Method of claim 3, in which the linear power value (31) comprises a product of the linear acceleration and the linear speed and the rotational power value (41) comprises a product of the rotational speed and the rotational acceleration.

5. Method of any one of the preceding claims, in which the linear power value (31) is proportional to the linear signal (12) and the rotational power value (41) is proportional to the rotation signal (22, 23).

6. Method of any one of the preceding claims, in which the step of ascertaining (80) comprises performing a division of the linear power value (31) and the rotational power value (41).

7. Method of any one of the preceding claims, in which the step of ascertaining (80) comprises performing a comparison of the linear power value (31) and the rotational power value (41)

8. Method of any one of the preceding claims, in which the step of ascertaining (80) the ratio value (81) is performed in dependence on a comparison (50) of the linear power value (31) and a predefined first minimum quantity (32) and/or a comparison (60) of the rotational power value (41) and a predefined second minimum quantity (42).

9. Method of any one of the preceding claims, with a step of evaluating (90) a quantity of the ratio value (81), in order to determine the crash type (92) and/or the crash location (93).

10. Method of any one of the preceding claims, with a step of evaluating (90) a quantity of the linear power value (31) and/or the rotational power value (41), in order to determine information on a crash severity (91).

11. Method of any one of the preceding claims, in which the linear signal (12) represents a signal provided by at least one linear acceleration sensor (2, 3, 4, 5) arranged in the vehicle (1), and in which the rotation signal (22, 23) represents a signal provided by at least one linear acceleration sensor (2, 3, 4, 5) and/or rotation rate sensor (6) arranged in the vehicle.


**Patentansprüche**

1. Verfahren zum Erkennen eines Aufpralls in einem Fahrzeug, wobei das Verfahren Folgendes umfasst:

Empfangen eines Linearsignals (12) über eine Schnittstelle, wobei das Linearsignal Informationen über eine geradlinige Bewegung des Fahrzeugs umfasst;
Bestimmen (30) eines linearen Leistungswerts (31), der auf dem Linearsignal beruht;
Empfangen eines Drehsignals (22, 23) über eine Schnittstelle, wobei das Drehsignal Informationen über eine Drehbewegung des Fahrzeugs umfasst;
Bestimmen (40) eines Drehleistungswerts (41), der auf dem Drehsignal beruht; und
Ermitteln (80) eines Verhältniswerts (81) auf der Grundlage eines Verhältnisses des linearen Leistungswerts dem Drehleistungswert, wobei der Verhältniswert geeignet ist, um Informationen über einen Aufpralltyp (92) und/oder einen Aufprallort (93) zu bestimmen.

2. Verfahren nach Anspruch 1, wobei das Drehsignal (22, 23) Informationen über eine Drehgeschwindigkeit, eine Nickgeschwindigkeit und/oder eine Rollgeschwindigkeit des Fahrzeugs umfasst.

3. Verfahren nach einem der vorhergehenden Ansprüche, wobei das Linearsignal (12) Informationen über eine geradlinige Beschleunigung und/oder eine geradlinige Geschwindigkeit umfasst und das Drehsignal (22, 23) Informationen über eine Drehgeschwindigkeit und/oder eine Drehbeschleunigung des Fahrzeugs umfasst.

4. Verfahren nach Anspruch 3, wobei der lineare Leistungswert (31) ein Produkt aus der geradlinigen Beschleunigung und der geradlinigen Geschwindigkeit umfasst und der Drehleistungswert (41) ein Produkt aus der Drehgeschwindigkeit und der Drehbeschleunigung umfasst.

5. Verfahren nach einem der vorhergehenden Ansprüche, wobei der lineare Leistungswert (31) zu dem Linearsignal (12) proportional ist und der Drehleistungswert (41) zu dem Drehsignal (22, 23) proportional ist.

**6.** Verfahren nach einem der vorhergehenden Ansprüche, wobei der Schritt des Ermittelns (80) das Durchführen einer Division des linearen Leistungswerts (31) und des Drehleistungswerts (41) umfasst.

**7.** Verfahren nach einem der vorhergehenden Ansprüche, wobei der Schritt des Ermittelns (80) das Durchführen eines Vergleichs des linearen Leistungswerts (31) und des Drehleistungswerts (41) umfasst.

**8.** Verfahren nach einem der vorhergehenden Ansprüche, wobei der Schritt des Ermittelns (80) des Verhältniswerts (81) durchgeführt wird in Abhängigkeit von einem Vergleich (50) des linearen Leistungswerts (31) und einer vordefinierten ersten Minimalgröße (32) und/oder eines Vergleichs (60) des Drehleistungswerts (41) und einer vordefinierten zweiten Minimalgröße (42).

**9.** Verfahren nach einem der vorhergehenden Ansprüche mit einem Schritt des Bewertens (90) einer Größe des Verhältniswerts (81), um den Aufpralltyp (92) und/oder den Aufprallort (93) zu bestimmen.

**10.** Verfahren nach einem der vorhergehenden Ansprüche mit einem Schritt des Bewertens (90) einer Größe des linearen Leistungswerts (31) und/oder des Drehleistungswerts (41), um Informationen über die Aufprallschwere (91) zu bestimmen.

**11.** Verfahren nach einem der vorhergehenden Ansprüche, wobei das Linearsignal (12) ein Signal darstellt, das von mindestens einem Linearbeschleunigungssensor (2, 3, 4, 5) bereitgestellt wird, der in dem Fahrzeug (1) angeordnet ist, und wobei das Drehsignal (22, 23) ein Signal darstellt, das von mindestens einem Linearbeschleunigungssensor (2, 3, 4, 5) und/oder einem Drehgeschwindigkeitssensor (6) bereitgestellt wird, die in dem Fahrzeug angeordnet sind.

## Revendications

**1.** Procédé de détection de collision dans un véhicule comprenant les étapes suivantes :

recevoir un signal linéaire (12) par l'intermédiaire d'une interface, le signal linéaire comprenant des informations sur un mouvement linéaire du véhicule ;
déterminer (30) une valeur de puissance linéaire (31), basée sur le signal linaire ;
recevoir un signal de rotation (22, 23) par l'intermédiaire d'une interface, le signal de rotation comprenant des informations sur un mouvement de rotation du véhicule ;
déterminer (40) une valeur de puissance de rotation (41) sur la base du signal de rotation ; et
évaluer (80) une valeur de rapport (81) sur la base d'un rapport de la valeur de puissance linéaire et de la valeur de puissance de rotation, la valeur de rapport étant appropriée pour déterminer des informations sur un type de collision (92) et/ou une position (93) de collision.

**2.** Procédé selon la revendication 1, dans lequel le signal de rotation (22, 23) comprend des informations sur un rapport de rotation, un taux de tangage et/ou un taux de roulis du véhicule.

**3.** Procédé selon l'une quelconque des revendications précédentes, dans lequel le signal linéaire (12) comprend des informations sur une accélération linéaire et/ou une vitesse linéaire et le signal de rotation (22, 23) comprend des informations sur une vitesse de rotation et/ou une accélération de rotation du véhicule.

**4.** Procédé selon la revendication 3, dans lequel la valeur de puissance linéaire (31) comprend un produit de l'accélération linéaire et de la vitesse linéaire, et la valeur de puissance de rotation (41) comprend un produit de la vitesse de rotation et de l'accélération de rotation.

**5.** Procédé selon l'une quelconque des revendications précédentes, dans lequel la valeur de puissance linéaire (31) est proportionnelle au signal linéaire (12), et la valeur de puissance de rotation (41) est proportionnelle au signal de rotation (22, 23).

**6.** Procédé selon l'une quelconque des revendications précédentes, dans lequel l'étape d'évaluation (80) comprend de procéder à une division de la valeur de puissance linéaire (31) et de la valeur de puissance de rotation (41).

**7.** Procédé selon l'une quelconque des revendications précédentes, dans lequel l'étape d'évaluation (80) comprend de procéder à une comparaison de la valeur de puissance linéaire (31) et de la valeur de puissance de rotation (41).

8. Procédé selon l'une quelconque des revendications précédentes, dans lequel l'étape d'évaluation (80) de la valeur de rapport (81) est effectuée en fonction d'une comparaison (50) de la valeur de puissance linéaire (31) et d'une première quantité minimale prédéfinie (32) et/ou une comparaison (60) de la valeur de puissance de rotation (41) et d'une seconde quantité minimale prédéfinie (42).

9. Procédé selon l'une quelconque des revendications précédentes, comprenant une étape d'évaluation (90) d'une quantité de la valeur de rapport (81) de manière à déterminer le type de collision (92) et/ou l'emplacement de la collision (93).

10. Procédé selon l'une quelconque des revendications précédentes, comprenant une étape d'évaluation (90) d'une quantité de la valeur de puissance linéaire (31) et/ou de la valeur de puissance de rotation (41) de manière à déterminer des informations sur la sévérité d'une collision (91).

11. Procédé selon l'une quelconque des revendications précédentes, dans lequel le signal linéaire (12) représente un signal délivré par au moins un détecteur d'accélération linéaire (2, 3, 4, 5) disposé dans le véhicule (1), et dans lequel le signal de rotation (22, 23) représente un signal délivré par au moins un détecteur d'accélération linéaire (2, 3, 4, 5) et/ou un détecteur de taux de rotation (6) disposés dans le véhicule.

Fig. 1

EP 2 261 089 B1

$$P_{Lin} = \frac{d}{dt} E_{Lin} = m \cdot dv \cdot a$$

$$P_{Rot} = \frac{d}{dt} E_{Rot} = J \cdot \omega \cdot \dot{\omega}$$

$$P_{Lin} > Thd_1$$

$$P_{Rot} > Thd_2$$

$$V_p = \frac{P_{Lin}}{P_{Rot}}$$

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008048159 A